# EUROPEAN PATENT APPLICATION

(11) **EP 1 784 022 A2**
(43) Date of publication of application: **09.05.2007**
(21) Application number: 06123296.3
(22) Date of filing: 31.10.2006
(51) Int. Cl.: H04N 7/26

(54) **Method and apparatus for encoding multiview video**

(30) Priority: 05.11.2005 KR 20050105730
(71) Applicant: Samsung Electronics Co., Ltd., Suwon-si 442-742 Gyeonggi-Do (KR)
(72) Inventor: Ha, Tae-hyeun, Suwon-si, Gyeonggi-do (KR)
(74) Representative: Brandon, Paul Laurence

(57) **Abstract**

A method and apparatus for encoding a multiview video using a minimum amount of information regarding the multiview video are provided. The method includes estimating a disparity vector between a reference frame and each adjacent frame at a different viewpoint from a viewpoint of the reference frame (S1310); generating a compensated version of the adjacent frame using the reference frame and the disparity vector (S1320); determining a correlation between the adjacent frame and the compensated frame (S1330); and determining a prediction structure for encoding the multiview video using the determined correlation (S1340). When the method and apparatus are used, a multiview video can be efficiently encoded using a prediction structure that uses a minimum amount of information regarding the multiview video.

## Description

The present invention relates to encoding a multiview video sequence.

Realism is an important factor in realizing high-quality information and telecommunication services. This realism can be achieved with video communication based on three-dimensional (3D) images. 3D imaging systems have many potential applications in education, entertainment, medical surgery, videoconferencing, and the like. To provide many viewers with more vivid and accurate information of a remote scene, three or more cameras are placed at slightly different viewpoints to produce a multiview sequence.

Reflecting the current interest in 3D images, a number of research groups have developed 3D-image processing and display systems. In Europe, research on 3DTV has been initiated through several projects such as DISTIMA, the objective of which is to develop a system for capturing, coding, transmitting and displaying digital stereoscopic image sequences. These projects have led to another project, PANORAMA, with the goal of enhancing visual information in 3D telepresence communication. The projects have also led to another project, ATTEST, in which various technologies for 3D-content acquisition, 3D-compression & transmission, and 3D-display systems were researched. In the ATTEST project, Moving Picture Experts Group 2 (MPEG-2) and digital video broadcasting (DVB) standards were applied to transmit 3D contents using temporal scalability. In temporal scaling, a base layer is used for the transmission of 2D contents and an advanced layer is used for the transmission of 3D contents.

The MPEG-2 standard was amended in 1996 to define a multiview profile (MVP). The MVP defines the usage of a temporal scalability mode for multi-camera sequences and acquisition camera parameters in an MPEG-2 syntax.

A base-layer stream which represents a multiview video signal can be encoded at a reduced frame rate, and an enhancement-layer stream, which can be used to insert additional frames in between, can be defined to allow reproduction at a full frame rate when both streams are available. A very efficient way to encode the enhancement layer is to determine the optimal method of performing motion-compensated estimation on each macroblock in an enhancement layer frame based on either a base layer frame or a recently reconstructed enhancement layer frame.

The process of stereo and multiview channel encoding such a multiview video signal using temporal scalability syntax is straightforward. For this purpose, a frame from a particular camera view (usually a left-eye frame) is defined as the base layer, and a frame from the other camera view is defined as the enhancement layer. The base layer represents a simultaneous monoscopic sequence. For the enhancement layer, although disparity-compensated estimation may fail in occluded regions, it is still possible to maintain the quality of a reconstructed image using motion-compensated estimation within the same channel. Since the MPEG-2 MVP was mainly defined for stereo sequences, it does not support multiview sequences and is inherently difficult to extend to multiview sequences.

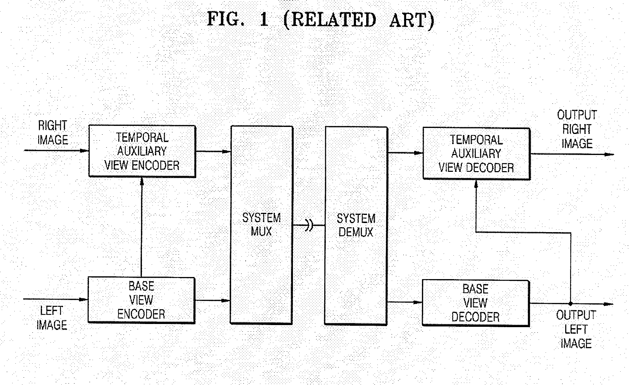

FIG. 1 is a block diagram of a related art encoder and decoder of the MPEG-2 MVP. The scalability provided by the MPEG-2 is used to simultaneously decode images having different resolutions or formats with an image-processing device. Among scaling supported by MPEG-2, temporal scaling is used to improve visual quality by increasing a frame rate. The MVP is applied to stereo sequences in consideration of temporal scalability.

The encoder and decoder illustrated in FIG. 1 are a stereo video encoder and decoder with temporal scalability. Left images in a stereo video are input to a base view encoder, and right images are input to a temporal auxiliary view encoder.

The temporal auxiliary view encoder provides temporal scalability, and is an interlayer encoder interleaving images between images of the base layer.

When the left image is separately encoded and decoded, a two-dimensional (2D) video can be obtained. When the left image and the right image are simultaneously encoded and decoded, a stereoscopic video can be obtained. To transmit or store a video, a system multiplexer and a system demultiplexer are needed to combine or separate sequences of the two images.

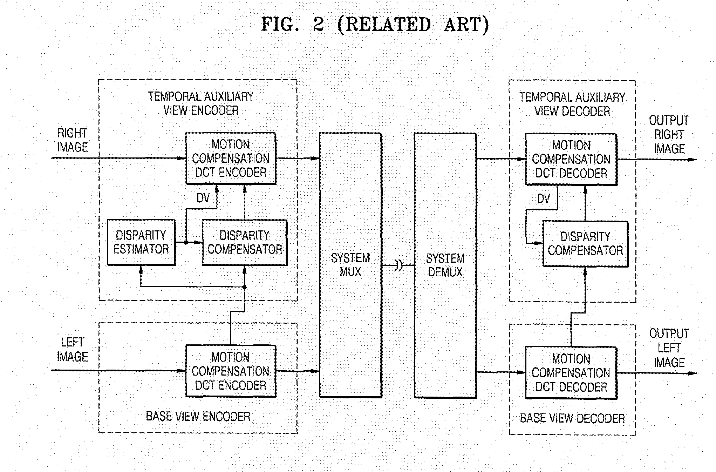

FIG. 2 is a block diagram of a related art stereo-video encoder and decoder using the MPEG-2 MVP.

An image of the base layer is encoded through motion compensation and a discrete cosine transform (DCT). The encoded image is decoded in a reverse process. A temporal auxiliary view encoder functions as a temporal interlayer encoder which performs prediction based on the decoded image of the base layer.

In other words, disparity compensated estimation may be performed twice, or disparity estimation and motion compensated estimation may each be performed once. Like an encoder and decoder of a base layer, the temporal auxiliary view encoder includes a disparity and motion compensated DCT encoder and decoder.

Further, a disparity compensated encoding process requires a disparity estimator and a compensator as a motion estimation/compensation encoding process requires a motion estimator and compensator. In addition to block-based motion/disparity estimation and compensation, the encoding process includes performing a DCT on a difference between a reconstructed image and an original image, quantization of DCT coefficients, and variable length encoding. On the other hand, a decoding process includes variable length decoding, inverse quantization and inverse DCT.

MPEG-2 encoding is a very effective compression method for bi-directional motion estimation is performed. Since the MPEG-2 encoding provides highly effective temporal scalability, bi-directional (B) pictures can be used to encode a right image sequence. Consequently, a highly compressed right sequence can be generated.

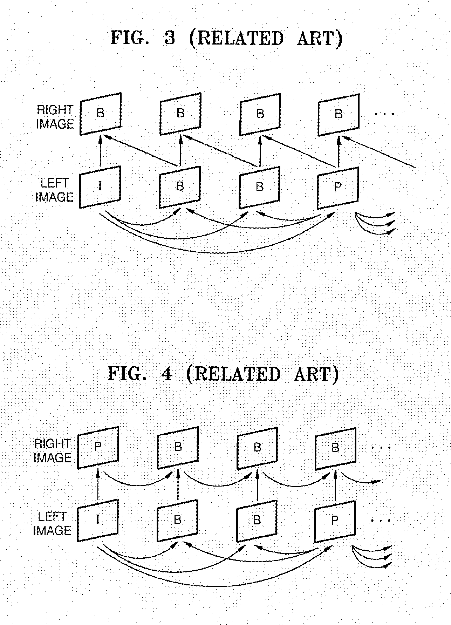

FIG. 3 illustrates disparity-based predictive encoding in which disparity estimation is used twice for bi-directional estimation.

A left image is encoded using a non-scalable MPEG-2 encoder, and a right image is encoded using a MPEG-2 temporal auxiliary view encoder based on the decoded left image.

In other words, a right image is predicted using two reference images, e.g., two left images, and encoded into a B picture. In this case, one of the two reference images is an isochronal left image to be simultaneously displayed with the right image, and the other is a left image that follows the isochronal left image.

Like the motion estimation/compensation, the two predictions have three prediction modes: a forward mode, a backward mode and an interpolated mode. The forward mode denotes disparity estimation based on the isochronal left image, and the backward mode denotes disparity estimation based on the left image that immediately follows the isochronal left image. In this case, a right image is predicted using disparity vectors of the two left images. Such an estimation method is called predictive encoding, considering only disparity vectors. Therefore, an encoder estimates two disparity vectors for each frame of a right image, and a decoder decodes the right image from the left image using the two disparity vectors.

FIG. 4 illustrates predictive encoding using a disparity vector and a motion vector for the bi-directional estimation. In the predictive encoding illustrated in FIG. 4, B pictures obtained through the bi-directional estimation of FIG. 3 are used. However, disparity estimation and motion estimation are each used once in the bi-directional estimation. That is, the disparity estimation using an isochronal left image and the motion estimation using a previous right image are used.

Further, the bi-directional estimation also includes three estimation modes, i.e., a forward mode, a backward mode and an interpolated mode, as in the disparity-based predictive encoding of FIG. 3. The forward mode denotes motion estimation based on a decoded right image, and the backward mode denotes disparity estimation based on a decoded left image.

As described above, since the MPEG-2 MVP does not consider a multiview video encoder, it is not suitable for encoding a multiview video. Therefore, a multiview video encoder for simultaneously providing a multiview video, which is stereoscopic and realistic, to many people is required.

Preferred embodiments of the present invention aim to provide a method and apparatus for efficiently encoding a multiview video which is realistic and simultaneously providing the encoded multiview video to many people.

Preferred embodiments of the present invention also aim to provide a method and apparatus for encoding a multiview video using a prediction structure that uses a minimum amount of information regarding the multiview video.

According to an aspect of the present invention, there is provided a method of encoding a multiview video, the method including: estimating a disparity vector between a reference frame and each adjacent frame at a different viewpoint from a viewpoint of the reference frame; generating a compensated version of the adjacent frame using the reference frame and the predicted disparity vector; determining a correlation between the adjacent frame and the compensated frame; and determining a prediction structure for encoding the multiview video using the determined correlation.

The correlation may indicate a similarity between the adjacent frame and the compensated frame, and the determination of the correlation may include calculating a degree of distortion Di (Vi, cVi) which is inversely proportional to a value corresponding to the correlation between the adjacent frame and the compensated frame, where Vi indicates a frame obtained at an i-th viewpoint from a reference viewpoint, cVi indicates a frame compensated using the reference frame and the disparity vector between the reference frame and the Vi frame, and i is an integer equal to or greater than zero.

The degree of distortion Di (Vi, cVi) may be calculated using at least one of a peak to signal noise ratio (PSNR) function, a mean of absolute difference (MAD) function, a sum of absolute difference (SAD) function, and a mean squared error (MSE) function for the adjacent frame and the compensated frame.

The determination of the prediction structure may include: comparing the degree of distortion Di (Vi, cVi) with a predetermined threshold value; determining a value of the integer i when the degree of distortion Di (Vi, cVi) starts to become greater than the predetermined threshold value; and determining a prediction structure in which a number of B frames is proportional to the value of the integer i as the prediction structure for encoding the multiview video.

The prediction structure can be used to perform disparity estimation between frames at a plurality of viewpoints in a horizontal direction and to perform motion estimation between frames over time in a vertical direction, and can be horizontally and vertically scaled.

The determination of the prediction structure may include determining a prediction structure which includes (i-1) B frames as the prediction structure for encoding the multiview video.

The prediction structure can be reconfigured according to the correlation at predetermined intervals.

The method may further include encoding the multiview video using the prediction structure.

According to another aspect of the present invention, there is provided an apparatus which encodes a multiview video, the apparatus including: a predictor which estimates a disparity vector between a reference frame and each adjacent frame at a different viewpoint from a viewpoint of the reference frame; a compensator which generates a compensated version of the adjacent frame using the reference frame and the predicted disparity vector; a correlation determiner which determines a correlation between the adjacent frame and the compensated frame; and a prediction structure determiner which determines a prediction structure for encoding the multiview video using the determined correlation.

According to another aspect of the present invention, there is provided a computer-readable recording medium on which a program for executing the method of encoding a multiview video is recorded.

The present invention will become more apparent by describing in detail exemplary embodiments thereof with reference to the attached drawings in which:
FIG. 1 is a block diagram of a related art encoder and decoder of a motion picture experts group 2 an MPEG-2 MVP;
FIG. 2 is a block diagram of a related art stereo-video encoder and decoder using the MPEG-2 MVP;
FIG. 3 illustrates disparity-based predictive encoding in which disparity estimation is used twice for bi-directional estimation;
FIG. 4 illustrates predictive encoding using a disparity vector and a motion vector for the bi-directional estimation;
FIG. 5 is a block diagram of an apparatus for encoding a multiview video according to an exemplary embodiment of the present invention;
FIG. 6 illustrates a unit encoding structure of a multiview video according to an exemplary embodiment of the present invention;
FIGS. 7A through 7F illustrate three types of B pictures and a P1 picture used in multiview video encoding according to an exemplary embodiment of the present invention;
FIGS. 8A and 8B illustrate a structure which determines the correlation between adjacent frames according to an exemplary embodiment of the present invention;
FIGS. 9A through 9C illustrates a prediction structure of an initial frame according to an exemplary embodiment of the present invention;
FIG. 10 illustrates prediction structures for encoding a multiview video according to an exemplary embodiment of the present invention;
FIG. 11 illustrates prediction structures for encoding a multiview video according to another exemplary embodiment of the present invention;
FIG. 12 illustrates prediction structures for encoding a multiview video according to another exemplary embodiment of the present invention;
FIG. 13 is a flowchart illustrating a method of encoding a multiview video according to an exemplary embodiment of the present invention; and
FIG. 14 is a block diagram of an apparatus for encoding a multiview video according to an exemplary embodiment of the present invention.

The present invention will now be described more fully with reference to the accompanying drawings, in which exemplary embodiments of the invention are shown. The invention may, however, be embodied in many different forms and should not be construed as being limited to the exemplary embodiments set forth therein; rather, these exemplary embodiments are provided so that this disclosure will be thorough and complete, and will fully convey the concept of the invention to those skilled in the art.

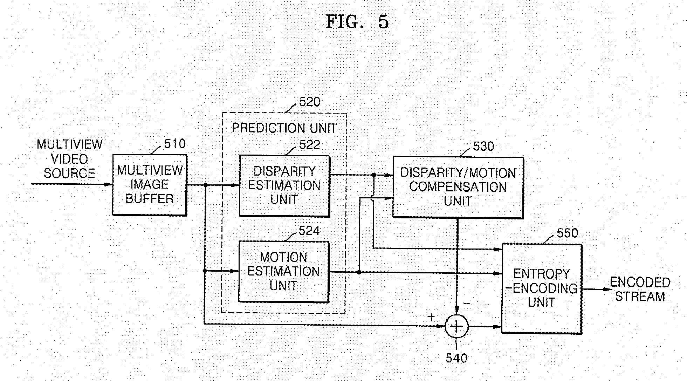

FIG. 5 is a block diagram of an apparatus for encoding a multiview video according to an exemplary embodiment of the present invention.

Referring to FIG. 5, the apparatus includes a multiview image buffer 510, a prediction unit 520, a disparity/motion compensation unit 530, a residual image encoding unit 540, and an entropy-encoding unit 550.

The apparatus can receive a multiview video source from a plurality of camera systems or through another method. The received multiview video is stored in the multiview image buffer 510. The multiview image buffer 510 provides the multiview video to the prediction unit 520 and the residual image encoding unit 540.

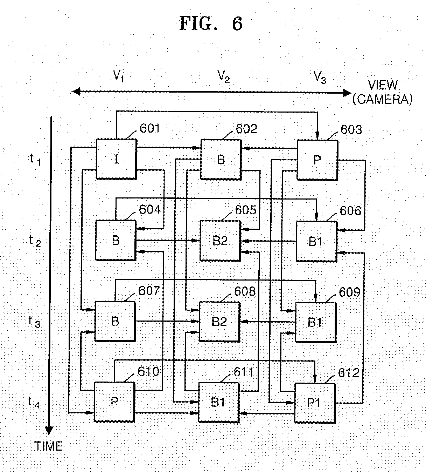

The prediction unit 520 includes a disparity estimation unit 522 and a motion estimation unit 524. The prediction unit 520 performs motion estimation and disparity estimation on the multiview video. The prediction unit 520 estimates a disparity vector and a motion vector in directions indicated by arrows illustrated in FIGS. 6 through 12, and provides the predicted disparity vector and motion vector to the disparity/motion compensation unit 530.

As illustrated in multiview video encoding structures illustrated in FIGS. 6 through 12, the prediction unit 520 may set directions for performing motion estimation and disparity estimation by efficiently using a multiview disparity vector and a motion vector which is generated when the multiview video source is extended based on a time axis. In other words, an MPEG-2 encoding structure can be extended based on a view axis to use spatial/temporal correlation of the multiview video.

The disparity/motion compensation unit 530 performs the disparity compensation and the motion compensation using the motion vector and the disparity vector predicted by the disparity estimation unit 522 and the motion estimation unit 524. The disparity/motion compensation unit 530 reconstructs an image using the predicted motion vector and disparity vector and provides the reconstructed image to the residual image encoding unit 540.

To provide better visual quality and stereoscopy, the residual image encoding unit 540 encodes a residual image obtained by subtracting the image compensated and reconstructed by the disparity/motion compensation unit 530 from the original image provided by the multiview image buffer 510 and provides the encoded residual image to the entropy-encoding unit 550.

The entropy-encoding unit 550 receives the predicted disparity vector and motion vector from the prediction unit 520 and the encoded residual image from the residual image encoding unit 540 and generates a bit stream for the multiview video source.

FIG. 6 illustrates a unit encoding structure of a multiview video according to an exemplary embodiment of the present invention. A core-prediction structure or a unit-prediction structure illustrated in FIG. 6 is based on the assumption that there are three views. A square block indicates an image frame in a multiview video. A horizontal arrow indicates a sequence of frames according to view or the positions of cameras, and a vertical arrow indicates a sequence of the frames according to time. An I picture indicates an "intra picture", identical to an I frame in MPEG-2/4 or H. 264. P and B pictures respectively indicate a "predictive picture" and a "bi-directional prediction picture", similar to P and B frames in MPEG-2.4 or H. 264.

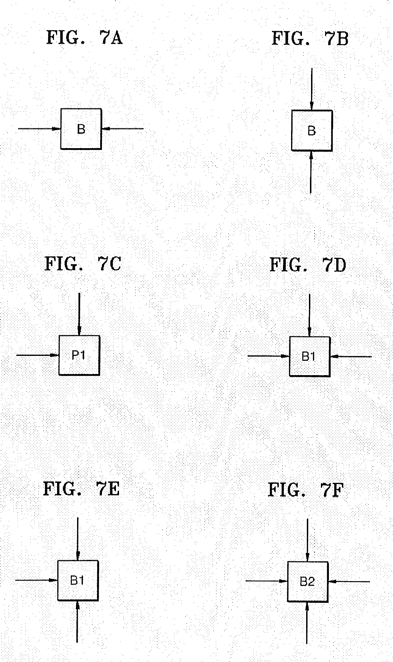

The P and B pictures are predicted by the motion estimation and the disparity estimation together in the multiview video coding. In FIG. 6, arrows between picture-frames indicate prediction directions. Horizontal arrows indicate disparity estimation, and vertical arrows indicate motion estimation. According to an exemplary embodiment of the present invention, there are three types of B pictures, which will now be described with reference to FIG. 7.

FIGS. 7A through 7F illustrate three types of B pictures and a P1 picture used in multiview video encoding according to an exemplary embodiment of the present invention.

According to the present exemplary embodiment, there are three types of B pictures: B, B1, and B2 pictures. In FIG. 7, the B, B1, and B2 pictures denote picture-frames predicted using two or more horizontally or vertically adjacent frames.

B pictures are predicted using two horizontally adjacent frames as illustrated in FIG. 7A or two vertically adjacent frames as illustrated in FIG. 7B. A picture predicted using a horizontally adjacent frame and a vertically adjacent frame as illustrated in FIG. 7C is a bi-directional prediction frame. However, the frame is defined as a P1 picture in this disclosure.

B1 pictures are predicted using two horizontally adjacent frames and one vertically adjacent frame as illustrated in FIG. 7D or a horizontally adjacent frame and two vertically adjacent frames as illustrated in FIG. 7E. B2 pictures are predicted using four horizontally or vertically adjacent frames as illustrated in FIG. 7F.

The unit encoding structure indicating a prediction sequence of a multiview video according to an exemplary embodiment of the present invention will now be described with reference to FIG. 6. Referring to FIG. 6, a basic prediction sequence is I -> P -> B (or P1) -> B1->B2.

First, an I frame 601 is intra-predicted. A P frame 603 is predicted by referring to an I frame 601, and a P frame 610 is predicted by referring to the I frame 601.

A B frame 602 is predicted by performing bi-directional prediction horizontally using the I frame 601 and the P frame 603. A B frame 604 and a B frame 607 are predicted by performing bi-directional prediction vertically using the I frame 601 and the P frame 610. A P1 frame 612 is predicted by referring the P frame 610 horizontally and the P frame 603 vertically.

Then, B 1 frames are predicted. Specifically, a B 1 frame 606 is predicted by referring the B frame 604 horizontally and the P frame 603 and the P1 frame 612 vertically. A B1 frame 609 is predicted by referring the B frame 607 horizontally and the P1 frame 612 vertically. A B1 frame 611 is predicted by referring the P frame 610 and the P1 frame 612 horizontally and the B frame 602 vertically.

Finally, B2 frames are predicted. Specifically, a B2 frame 605 is predicted by referring the B frame 604 and the B 1 frame 606 horizontally and the B frame 602 and the B 1 frame 611 vertically. In addition, a B2 frame 608 is predicted by referring the B frame 607 and the B1 frame 609 horizontally and the B frame 602 and the B1 frame 611 vertically.

As described above with reference to FIGS. 6 and 7A through 7F, according to exemplary embodiments of the present invention, bi-directional prediction is performed with reference not only to B frames, but also to B1 and B2 frames. Since the number of B type frames can be increased, the amount of information required for encoding a multiview image can be reduced.

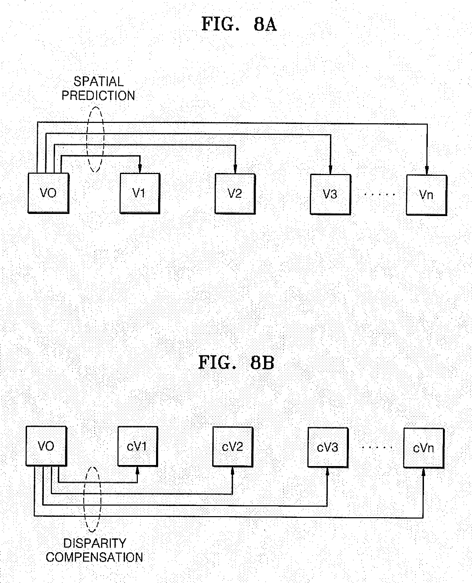

FIGS. 8A and 8B illustrate a structure which determines the correlation between adjacent frames according to an exemplary embodiment of the present invention. V1 through Vn illustrated in FIG. 8A indicate frames filmed and output by multiview cameras. In FIGS. 8A and 8B, a camera which outputs a V0 frame is designated as a base camera. However, other cameras can also be designated as the base camera. Spatial prediction, that is, disparity prediction, is performed using frames output from a base camera and n adjacent cameras.

Images cV1 through cVn illustrated in FIG. 8B indicate compensated image frames. The compensated image frames can be generated using a disparity vector estimated as illustrated in FIG. 8A and the V0 frame output from the base camera.

For example, a disparity vector between the V0 frame and the V2 frame is predicted using a block-based disparity estimation method. A cV2 frame is compensated using the predicted disparity vector and the V0 frame. When images of the V0 frame and the V2 frame have large matching portions, the compensated cV2 frame and the original V2 frame are similar. In this case, a multiview image may be perfectly encoded using the disparity vector between the V0 frame and the V2 frame.

However, when the images of the V0 frame and the V3 frame have matching portions, a disparity vector between the V0 frame and the V3 frame is predicted and a cV3 frame is predicted using the V0 frame and the predicted disparity vector. In this case, the original V3 frame and the cV3 frame are significantly different.

As described above, similarities between adjacent frames affects the prediction structure. Therefore, the similarities between adjacent frames should be determined. There may be a correlation between an original adjacent frame and an adjacent frame compensated using a disparity vector, when the original adjacent frame and the compensated adjacent frame are similar. According to the present exemplary embodiment, the similarity between adjacent frames can be determined according to the correlation between an original frame and a compensated adjacent frame.

More specifically, when it is assumed that the V0 frame is designated as a reference frame output from a base camera, it can be determined if images included in the V0 frame and a Vi frame are similar by calculating the correlation between a compensated cVi frame and the original Vi frame or calculating a degree of distortion which is inversely proportional to a value corresponding to the correlation.

The degree of distortion, which indicates the difference between an original image and a compensated image, is defined as Di (Vi, cVi), where i is a integer greater than 0. The Vi frame is filmed and output by an i-th camera from the base camera, and the cVi frame is compensated frame which is obtained, after the Vi frame is compensated, using the V0 frame filmed by the base camera and the disparity vector between the V0 frame and the Vi frame.

According to the present exemplary embodiment, a function such as a peak to signal noise ratio (PSNR), a mean of absolute difference (MAD), a sum of absolute difference (SAD), or a mean squared error (MSE) may be used to calculate the degree of distortion Di (Vi, cVi). For example, when the SAD is used, the degree of distortion can be obtained by adding all absolute values of differences between real pixel values of sub-blocks (or macroblocks) in the Vi frame output from the i-th camera and pixel values of sub-blocks (or macroblocks) in the compensated cVi frame.

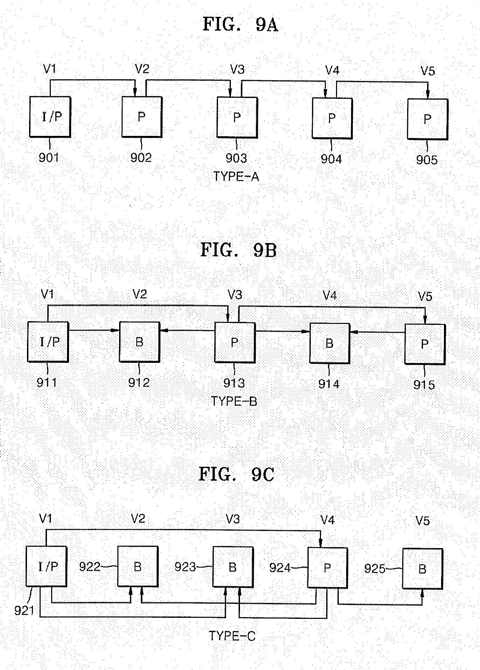

FIGS. 9A through 9C illustrate a prediction structure of an initial frame according to an exemplary embodiment of the present invention.

Referring to FIGS. 9A through 9C, the prediction structure is determined when an initial prediction structure is determined or when prediction is performed using an I frame. For example, in the prediction structure, the number of B frames between an I frame and a P frame is proportional to the similarity between the I frame and the P frame at a time t1. In addition, an exemplary embodiment of the present invention suggests a picture structure which can be reconfigured at predetermined intervals according to correlation between a reference frame output from a base camera and adjacent frames output from adjacent cameras.

According to the present invention, a value of the integer i is determined when the degree of distortion Di (Vi, cVi) starts to become greater than a predetermined threshold value. In addition, a prediction structure in which the number of B frames is proportional to the value of the integer i is determined as a prediction structure for multiview video encoding. The threshold value can be experimentally determined. Alternatively, the threshold value may vary according to a function for calculating the degree of distortion Di (Vi, cVi).

According to an exemplary embodiment of the present invention, when prediction starts from the I frame, if the degree of distortion Di (Vi, cVi) is smaller than a predetermined threshold value, a multiview video can be encoded using a prediction structure including (i-1) B frames.

Referring to FIGS. 8A through 9C, when a degree of distortion D1 (V1, cV1) between the V1 frame and a reconstructed cV1 frame is greater than a predetermined threshold value, the correlation between the V1 frame and the reconstructed cV1 frame is low. Therefore, a type-A prediction structure illustrated in FIG. 9A, which does not include a B picture, may be used for prediction.

The type-A prediction structure does not use a B picture and uses only I and P pictures. The type-A prediction structure may be used when the correlation between adjacent frames is low. In other words, a P picture 902 is predicted using an I or P picture 901, and a P picture 903 is predicted using the P picture 902.

When the degree of distortion D1 (V1, cV1) is smaller than a predetermined threshold value, but when images of the V0 frame and the V2 frame have little matching portions, the degree of distortion D2 (V2, cV2) may be greater than the predetermined threshold value. In this case, a type-B prediction structure illustrated in FIG. 9B, which includes one B picture between an I or P picture 911 and a P picture 913, may be used for prediction. When the type-B prediction structure illustrated in FIG. 9B is used, a multiview video can be more efficiently compression-encoded using less information compared to when the type-A prediction structure without the B picture illustrated in FIG. 9A is used. The type-B prediction structure can be used when the correlation between adjacent frames is intermediate, compared with the correlations when the type-A prediction structure and the type-C prediction structure of FIGS. 9A and 9C are used, respectively.

When the degree of distortion D2 (V2, cV2) is smaller than a predetermined threshold value but a degree of distortion D3 (V3, cV3) is greater than the predetermined threshold value, if the correlation between adjacent frames, which are between an I picture and a P picture, or adjacent frames, which are between P pictures, is higher than the correlation in the type-A and type-B prediction structures of FIGS. 9A and 9B, a type-C prediction structure may be used. Referring to FIG. 9C, the type-C prediction structure includes two B pictures 922 and 923, which are generated as a result of bi-directional prediction, between an I or P picture 921 and a P picture 924 referred to by the B pictures 922 and 923. As described above, when the type-C prediction structure of FIG. 9C, which includes two B pictures is used for prediction, a multiview video can be more efficiently compression-encoded using less information compared to when the type-A prediction structure of FIG. 9A or the type-B prediction structure of FIG. 9B is used.

In this disclosure, the type-A prediction structure, which does not include a B frame, the type-B prediction structure, which regularly includes one B frame, and the type-C prediction structure, which includes two B frames, are described as examples. However, the A through type-C prediction structures illustrated in FIGS. 9A through 9C can be scaled according to the number of cameras, that is, the number of viewpoints. In other words, when there is a high correlation between an original frame and a compensated, reconstructed frame, a prediction structure, which includes a greater number of B pictures, may be used. Therefore, although not shown, the number of B pictures between pictures referred to by the B pictures may increase to three or more. In addition, the present invention has been described assuming that an I frame at a V1 viewpoint is a reference frame. However, a P frame may be the reference frame.

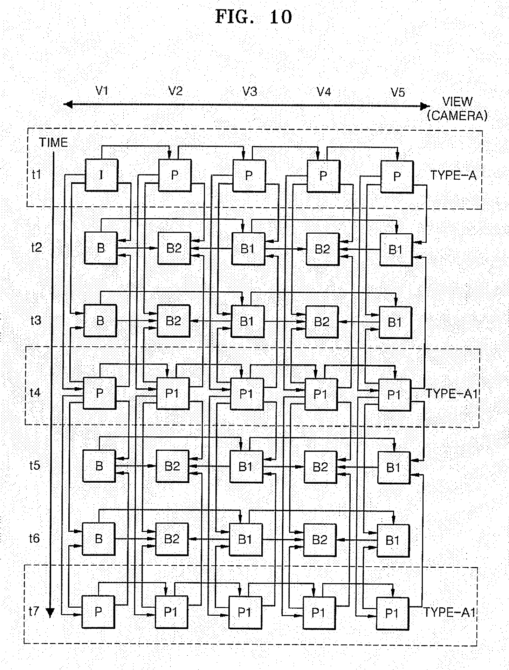

FIG. 10 illustrates prediction structures for encoding a multiview video according to an exemplary embodiment of the present invention.

Referring to FIG. 10, a prediction structure for performing prediction using an I frame, that is, at a time t1, is determined. In FIG. 10, the degree of distortion D1 (V1, cV1) described above is greater than a predetermined threshold. Thus, prediction starts with the type-A prediction structure illustrated in FIG. 9A. Prediction structures at times t2 and t3 are determined according to the type-A prediction structure at the time t1.

At a time t4, the degree of distortion Di of the multiview video is calculated to determine a prediction structure. Referring to FIG. 10, since the degree of distortion D1(V1, cV1) at the time t4 is greater than the predetermined threshold value, a type-A1 prediction structure, similar to the type-A prediction structure, is used for prediction. The type-A1 prediction structure includes P and P1 frames. The type-A1 prediction structure is similar to the type-A prediction structure except that prediction starts with the P frame in the type-A1 prediction structure. Prediction structures at times t5 and t6 are determined according to the type-A1 prediction structure at the time t4.

At a time t7, Di of the multiview video is calculated again to determine a prediction structure. Since the degree of distortion D1 (V1, cV1) at the time t7 is also greater than the predetermined threshold value, the type-A1 prediction structure, similar to the type-A prediction structure, is used for prediction. As illustrated in FIG. 10, the multiview video can be predicted using the type-A and type-A1 prediction structures.

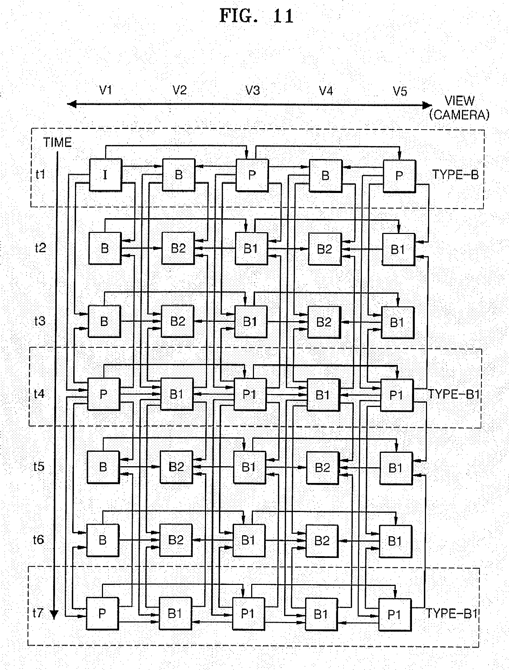

FIG. 11 illustrates prediction structures for encoding a multiview video according to another exemplary embodiment of the present invention.

Referring to FIG. 11, the degree of distortion D1 (V1, cV1) described above is smaller than a predetermined threshold but the degree of distortion D2 (V2, cV2) is greater than the predetermined threshold. Thus, prediction starts with the type-B prediction structure illustrated in FIG. 9B. Prediction structures at the times t2 and t3 are determined according to the type-B prediction structure at the time t1.

At the time t4, Di of the multiview video is calculated to determine a prediction structure. Referring to FIG. 11, since the degree of distortion D1 (V1, cV1) at the time t4 is smaller than the predetermined threshold value but the degree of distortion D2 (V2, cV2) at the time t4 is greater than the predetermined threshold value, a type-B1 prediction structure, similar to the type-B prediction structure, is used for prediction. The type-B 1 prediction structure is similar to the type-B prediction structure except that prediction starts with a P frame in the type-B1 prediction structure. The type-B1 prediction structure includes P, B1, P1, B1, and P1 frames sequentially arranged. Prediction structures at the times t5 and t6 are determined according to the type-B1 prediction structure at the time t4.

At the time t7, Di of the multiview video is calculated again to determine a prediction structure. As illustrated in FIG. 11, the multiview video can be predicted using the type-B and type-B1 prediction structures.

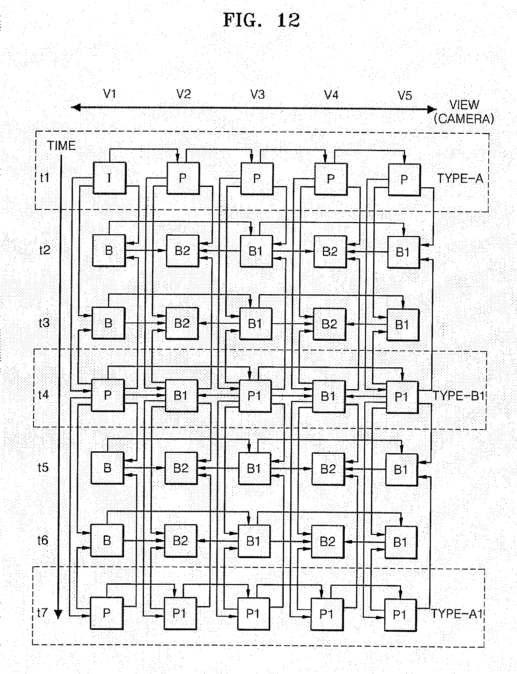

FIG. 12 illustrates prediction structures for encoding a multiview video according to another exemplary embodiment of the present invention.

Referring to FIG. 12, a prediction structure at the time t1 is determined. In FIG. 12, prediction starts with the type-A prediction structure, since the degree of distortion D1 (V1, cV1) is greater than a predetermined threshold value. Prediction structures at the times t2 and t3 are determined according to the type-A prediction structure at the time t1.

At the time t4, Di of the multiview video is calculated to determine a prediction structure. Referring to FIG. 12, since the degree of distortion D1 (V1, cV1) at the time t4 is smaller than the predetermined threshold value but the degree of distortion D2 (V2, cV2) at the time t4 is greater than the predetermined threshold value, the type-B1 prediction structure is used for prediction. Prediction structures at the times t5 and t6 are determined according to the type-B1 prediction structure at the time t4.

At the time t7, Di of the multiview video is calculated again to determine a prediction structure. As illustrated in FIG. 12, the multiview video can be predicted sequentially using the type-A, the type-B1, and the type-A1 prediction structures. In other words, a multiview video can be predicted while changing prediction structures according to characteristics of the multiview video. In detail, as illustrated in FIGS. 10 through 12, a prediction structure may be applied to all groups of groups of pictures (GOGOP) and may be reconfigured at an initial end from which prediction starts with an I frame. Even when prediction starts with a P frame, a prediction structure may be reconfigured into a modified version of a prediction structure used when prediction starts with an I frame. Therefore, the prediction structures for multiview video encoding according to the present invention can be reconfigured according to the correlation between frames at predetermined intervals.

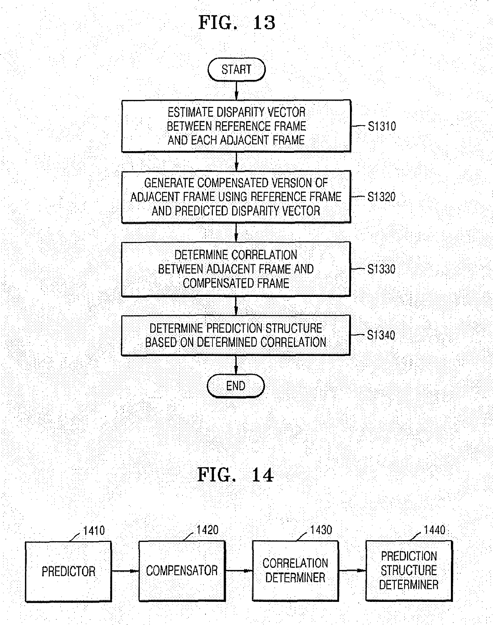

FIG. 13 is a flowchart illustrating a method of encoding a multiview video according to an exemplary embodiment of the present invention.

Referring to FIG. 13, a disparity vector between a reference frame and each adjacent frame at a different viewpoint from that of the reference frame is predicted (operation S1310). A compensated version of the adjacent frame is generated using the reference frame and the predicted disparity vector (operation S 1320).

The correlation between the adjacent frame and the compensated frame is determined (operation S1330). The correlation between the adjacent frame and the compensated frame may be determined by calculating the degree of distortion Di (Vi, cVi), which is inversely proportional to a value corresponding to the correlation between the adjacent frame and the compensated frame. In this case, Vi indicates a frame obtained at an i^{th} viewpoint from a reference viewpoint, cVi indicates a frame compensated using a reference frame and a disparity vector between the reference frame and the Vi frame, and i is an integer equal to or greater than 0.

As described above, at least one of the PSNR, MAD, SAD, and MSE functions for an original adjacent frame and a compensated version of the adjacent frame may be used to calculate the degree of distortion Di (Vi, cVi).

A prediction structure for encoding the multiview video according to an exemplary embodiment of the present invention is determined based on the determined correlation (operation S1340). The determination of the prediction structure includes comparing the degree of distortion Di (Vi, cVi) with a predetermined threshold value; determining a value of the integer i when the degree of distortion Di (Vi, cVi) starts to become greater than the predetermined threshold value; and determining a prediction structure in which the number of B frames is proportional to the value of the integer i as a prediction structure for encoding the multiview video.

As described with reference to FIGS. 6 through 9C, a prediction structure for encoding a multiview video according to an exemplary embodiment of the present invention can be used to perform disparity estimation between frames at a plurality of viewpoints in a horizontal direction and to perform motion estimation between frames over time in a vertical direction, and can be horizontally and vertically scaled.

When prediction starts with an I frame, a prediction structure which includes (i-1) B frames may be determined as the prediction structure for multiview video encoding. The prediction structure for multiview video encoding can be reconfigured according to the correlation between a reference frame and an adjacent frame at predetermined intervals. A multiview video can be encoded using such a determined, reconfigurable prediction structure.

FIG. 14 is a block diagram of an apparatus for encoding a multiview video according to an exemplary embodiment of the present invention. The apparatus includes a predictor 1410, a compensator 1420, a correlation determiner 1430, and a prediction structure determiner 1440.

A multiview video source output from a multiview video buffer (not shown) is input to the predictor 1410 and the compensator 1420. The predictor 1410 estimates a disparity vector between a reference frame and each adjacent frame at a different viewpoint and transmits the predicted disparity vector to the compensator 1420. The compensator 1420 generates a compensated version of the adjacent frame using the reference frame and the predicted disparity vector.

The correlation determiner 1430 determines the correlation between the adjacent frame and the compensated frame. As described above, the correlation between the adjacent frame and the compensated frame may be determined by calculating the degree of distortion Di (Vi, cVi), which is inversely proportional to a value corresponding to the correlation between the adjacent frame and the compensated frame.

The prediction structure determiner 1440 determines a prediction structure for encoding the multiview video, according to an exemplary embodiment of the present invention based on the determined correlation.

The configuration of the apparatus for encoding the multiview video using the determined prediction structure may be identical to the configuration of the apparatus illustrated in FIG. 5.

As described above, preferred embodiments of the present invention provide a method and apparatus for efficiently encoding a multiview video to simultaneously provide the multiview video which is realistic to many people.

Preferred embodiments of the present invention also provide a method and apparatus for encoding a multiview video using a prediction structure that is determined according to the correlation between an adjacent frame and a compensated version of the adjacent frame and uses a minimum amount of information regarding the multiview video.

The present invention can also be implemented as computer-readable code on a computer-readable recording medium. Code and code segments for accomplishing the present invention can be easily construed by programmers skilled in the art to which the present invention pertains. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer-readable code is stored and executed in a distributed fashion.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of encoding a multiview video, the method comprising:
estimating a disparity vector between a reference frame and each adjacent frame at a different viewpoint from a viewpoint of the reference frame(S 1310);
generating a compensated frame using the reference frame and the disparity vector, wherein the compensated frame is a compensated version of an adjacent frame (S1320);
determining a correlation between the adjacent frame and the compensated frame (S1330); and
determining a prediction structure for encoding the multiview video using the correlation (S1340).

2. The method of claim 1, wherein the correlation indicates a similarity between the adjacent frame and the compensated frame, and the determining of the correlation (S1330) comprises calculating a degree of distortion Di (Vi, cVi) which is inversely proportional to a value corresponding to the correlation between the adjacent frame and the compensated frame, where Vi indicates a frame obtained at an i-th viewpoint from a reference viewpoint, cVi indicates a frame compensated using the reference frame and the disparity vector between the reference frame and the Vi frame, and i is an integer equal to or greater than zero.

3. The method of claim 2, wherein the degree of distortion Di (Vi, cVi) is calculated using at least one of a peak to signal noise ratio function, a mean of absolute difference function, a sum of absolute difference function, and a mean squared error function for the adjacent frame and the compensated frame.

4. The method of claim 2, wherein the determining of the prediction structure comprises:
comparing the degree of distortion Di (Vi, cVi) with a threshold value;
determining a value of the integer i if the degree of distortion Di (Vi, cVi) becomes greater than the threshold value; and
determining a prediction structure in which a number of B frames is proportional to the value of the integer i as the prediction structure for encoding the multiview video.

5. The method of any preceding claim, wherein the prediction structure is used to perform disparity estimation between frames at a plurality of viewpoints in a horizontal direction and to perform motion estimation between frames over time in a vertical direction, and can be horizontally and vertically scaled.

6. The method of claim 4, wherein the determining of the prediction structure comprises determining a prediction structure (S1340) which comprises (i-1) B frames as the prediction structure for encoding the multiview video.

7. The method of any preceding claim, wherein the prediction structure can be reconfigured at intervals according to the correlation.

8. The method of any preceding claim, further comprising encoding the multiview video using the prediction structure.

9. An apparatus for encoding a multiview video, the apparatus comprising:
a predictor (520) which estimates a disparity vector between a reference frame and each adjacent frame at a different viewpoint from a viewpoint of the reference frame;
a compensator (530) which generates a compensated frame using the reference frame and the disparity vector, wherein the compensated frame is a compensated version of an adjacent frame;
a correlation determiner which determines a correlation between the adjacent frame and the compensated frame; and
a prediction structure determiner which determines a prediction structure for encoding the multiview video using the correlation.

10. The apparatus of claim 9, wherein the correlation indicates a similarity between the adjacent frame and the compensated frame, and the correlation determiner calculates a degree of distortion Di (Vi, cVi) which is inversely proportional to a value corresponding to the correlation between the adjacent frame and the compensated frame to determine the correlation, where Vi indicates a frame obtained at an i-th viewpoint from a reference viewpoint, cVi indicates a frame compensated using the reference frame and the disparity vector between the reference frame and the Vi frame, and i is an integer equal to or greater than zero.

11. The apparatus of claim 10, wherein the correlation determination unit calculates the degree of distortion Di (Vi, cVi) using at least one of a peak to signal noise ratio (PSNR) function, a mean of absolute difference (MAD) function, a sum of absolute difference (SAD) function, and a mean squared error (MSE) function for the adjacent frame and the compensated frame.

12. The apparatus of claim 10, wherein the prediction structure determiner compares the degree of distortion Di (Vi, cVi) with a predetermined threshold value, determines a value of the integer i if the degree of distortion Di (Vi, cVi) becomes greater than the threshold value, and determines a prediction structure, in which a number of B frames is proportional to the value of the integer i, as the prediction structure for encoding the multiview video.

13. The apparatus of any one of claims 9-12, wherein the prediction structure is used to perform disparity estimation between frames at a plurality of viewpoints in a horizontal direction and to perform motion estimation between frames over time in a vertical direction, and can be horizontally and vertically scaled.

14. The apparatus of claim 12, wherein the prediction structure determiner determines a prediction structure which includes (i-1) B frames as the prediction structure for encoding the multiview video.

15. The apparatus of any one of claims 9-14, wherein the prediction structure can be reconfigured at intervals according to the correlation.

16. The apparatus of any one of claims 9-15, further comprising an encoding unit (550) which encodes the multiview video using the prediction structure.

17. A computer-readable recording medium having stored thereon a computer program, wherein the program performs a method, the method comprising:
estimating a disparity vector between a reference frame and each adjacent frame at a different viewpoint from a viewpoint of the reference frame;
generating a compensated frame using the reference frame and the disparity vector, wherein the compensated frame is a compensated version of an adjacent frame;
determining a correlation between the adjacent frame and the compensated frame; and
determining a prediction structure for encoding the multiview video using the correlation.

18. A method of encoding an image, the method comprising:
estimating a disparity vector between a first image and a second image at a different viewpoint from a viewpoint of the first image;
generating a third image using the first image and the disparity vector;
determining a correlation between the second image and the third image; and
determining a prediction structure for encoding the first and second images using the correlation.

19. An apparatus which encodes an image, the apparatus comprising:
a predictor (520) which estimates a disparity vector between a first image and a second image at a different viewpoint from a viewpoint of the first image;
a generator (530) which generates a third image using the first image and the disparity vector;
a correlation determiner which determines a correlation between the second image and the third image; and
a prediction structure determiner which determines a prediction structure for encoding the first and second images using the correlation.
